# EUROPEAN PATENT SPECIFICATION

(11) **EP 0 701 937 B1**
(45) Date of publication and mention of the grant of the patent: **05.04.2000**
(21) Application number: 94117804.8
(22) Date of filing: 11.11.1994
(51) Int. Cl.: B61G 5/02

(54) **A female connection member for slackless drawbar assembly**
Aufnehmendes Verbindungselement für eine spielfreie Zugstangenanordnung
Joint d'accouplement femelle pour une barre de traction sans jeu

(30) Priority: 19.09.1994 US 308609
(43) Date of publication of application: 20.03.1996
(73) Proprietor: WESTINGHOUSE AIR BRAKE COMPANY, Wilmerding, PA 15148 (US)
(72) Inventor: Kanjo, Wajih, Lockport, Illinois 60441 (US); Hawryszkow, Michael G., Munster, Indiana 46321 (US); Daugherty Jr., David W., Bolingbrook, Illinois 60440 (US)
(74) Representative: Petri, Stellan

(56) References cited:
- EP-A- 0 456 222
- GB-A- 244 453
- US-A- 5 115 927

## Description

### FIELD OF THE INVENTION

The present invention relates, in general, to slackless type drawbar assemblies which are presently being extensively used by the railroad industry to couple the adjacently disposed ends of a pair of railway type freight cars together in a substantially semi-permanent manner and, more particularly, this invention relates to a specially configured female connection member for use in conjunction with a specially configured male connection member adapted to carry a ball and race assembly at least at one end thereof in order to accomplish the requisite amount of angling movements required between such adjacently disposed ends of the pair of railway freight cars during normal operation on a track structure.

### BACKGROUND OF THE INVENTION

Such slackless type drawbar assemblies, as is well known in the art, have been in widespread use for several years, prior to the development of the present invention, to couple together adjacently disposed ends of a pair of railway freight cars in a substantially semi-permanent fashion.

The freight cars which are coupled together in this particular manner are usually of the type used by the railroad industry in what is referred to as dedicated type service. Such dedicated service type railway cars at least include; for example, freight cars used to haul coal, coke, and/or various other types of raw minerals, light truck and automobile transport carriers, tank cars used to transport various types of liquids, as well as, freight cars that are used to transport various types of building materials.

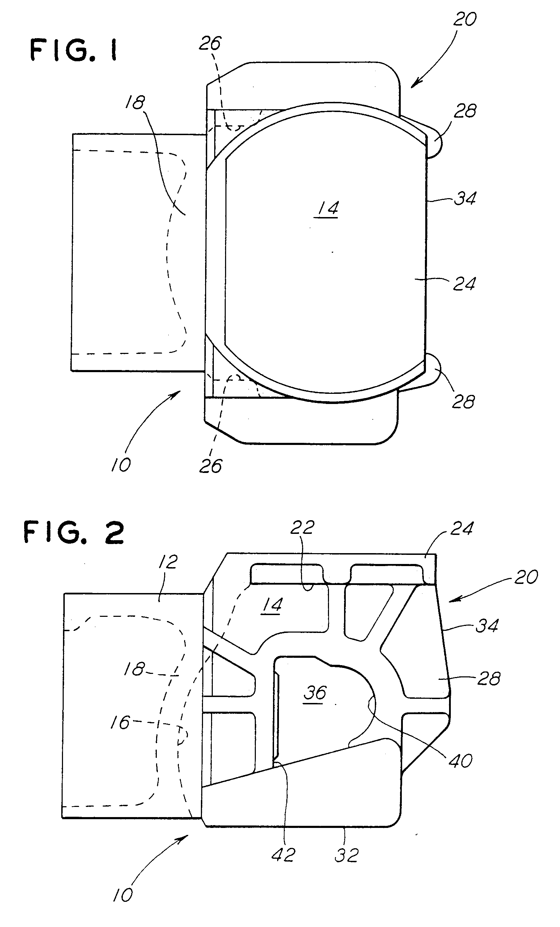

One prior art slackless type drawbar assembly, known to applicants at the present time, is taught in U.S. Patent No. 5,000,330. Shown therein is a pair of railway freight cars which have their adjacently disposed ends connected together by the slackless drawbar assembly. This slackless type drawbar assembly, as illustrated in Figures 2 and 3, is constructed in such a manner that will enable it to operate with a positioning apparatus.

This drawbar includes a shank portion provided with a non-rotatable fixed end portion movably secured within one end of the center sill portion of the car body member. The shank portion, also, includes a rotatable end portion secured within one end of the center sill portion of an adjacently disposed car body member. Each of the fixed end portion and the rotatable end portion of such slackless drawbar assembly extends into pocket castings which have follower blocks, which differ slightly, disposed therein but otherwise the center sill portions and pocket casting parts of both car body members are substantially identical and are best seen in the enlarged view of Figure 3A.

The fixed end portion is held in place in the center sill portion of such car body member by a key and against a follower member disposed in the pocket casting. The pocket casting is received within the center sill opening, defined at it's inboard end by rear stop members which abut against side wall extensions provided on the pocket casting. A shim member may be disposed intermediate the rear stop members and the side wall extensions of such pocket casting. The shim member is replaced with a thicker shim member, when excessive wear requires the pocket casting to be spaced a further distance from the rear stop members.

The pocket casting includes a cup-like cavity formed by an end wall portion and an encircling skirt portion of such pocket casting. Within such cup-like cavity, the end wall portion exhibits an inclined face formed with a generally shallow V-shaped concavity.

One embodiment of a wedge shaped member, illustrated in Figures 9 and 10, is provided with two laterally projecting guide tabs to minimize lateral shifting thereof. Lifting or positioning lugs, also, project from the sides of such wedge shaped member. Access to both the lugs and the wedge shaped member is provided by an access opening or slot formed in the skirt portion of the pocket casting and a corresponding aperture provided in the top web of the center sill portion and in a lower channel member (which supports such pocket casting) to enable the insertion of a tool to engage the lugs of the wedge shaped member without having to remove the pocket casting. The wedge shaped member may, also, be vertically positioned by inserting a tool through an opening, or slot, formed in the pocket casting and the side walls (not shown) of the center sill portion.

Another embodiment of such wedge shaped member, as shown in Figure 3A, is provided with a depending tail piece portion. This tail piece portion of such wedge shaped member extends in a downwardly direction through bottom openings formed in the pocket casting skirt portion and in the lower channel.

The rotatable end of the drawbar assembly is, also, received in a center sill opening of the car body. Within the center sill opening is a pocket casting, having a wedge, and a follower block of structure similar to that described in connection with the stationary or fixed end, although it may extend outwardly of the pocket casting to engage a larger portion of the rotatable end. A shim may be disposed between the rear stop members and the pocket casting wall as, also, described at the fixed end. Similar wedge member access slots and apertures are, also, provided in the pocket casting and the top web and sides of the center sill portion.

Channels are, also, removably secured, by bolts or the like, across the center sill to support the pocket casting and the wedge for both the fixed end of the drawbar assembly as well as the rotatable end.

Should a slack adjusting wedge member, and/or adjacent parts, become worn to the point such that the wedge member will no longer function to eliminate slack, the wedge member can be lifted by extending a tool through the openings and apertures into engagement with the wedge lugs.

Another method is to insert a tool through the bottom openings in the pocket casting skirt portion and lower channel and apply a vertical force to the bottom of the wedge shim, or by pushing upward on a wedge tail piece if such tail piece is provided. This will allow the worn parts to be spaced further from the rear stop members and a shim member to be disposed between the rear stop members and the pocket casting wall, or a shim to be replaced with a thicker shim to compensate for dimensional changes in worn but still usable parts. Similarly, if it becomes necessary to disconnect the drawbar assembly, this can be accomplished at either or both ends by lifting the wedge member and removing either, or both, the key and the pulling blocks (by first removing the cross plate).

### SUMMARY OF THE INVENTION

The present invention provides a female connection member that is used in conjunction with a slackless type drawbar assembly which connects together adjacently disposed ends of a pair of railway cars in a substantially semi-permanent fashion. Such female connection member includes a first end portion, having a first predetermined configuration which enables the first end portion of such female connection member to be engaged within an outer end portion of a center sill member disposed on a bottom portion of a car body member of a first railway car. A radially opposed second end portion of such female connection member extends outwardly from the outer end portion of such center sill member. There is a cavity formed in such radially opposed second end portion of the female connection member. This cavity is defined by an inner surface of a back wall portion, having a second predetermined configuration, an inner surface of a top wall portion and an inner surface of a pair of side wall portions. Each side wall portion having a third predetermined configuration. This cavity is open adjacent at least a portion of a bottom and an outer end of such radially opposed second end portion of the female connection member. A first opening, having a fourth predetermined configuration, is formed through a first one of such pair of side wall portions and a radially opposed second opening, having a fifth predetermined configuration, is formed through a second one of such pair of side wall portions.

### OBJECTS OF THE INVENTION

It is, therefore, one of the primary objects of the present invention to provide a female connection member for use with a slackless type drawbar assembly that connects together, in a substantially semi-permanent fashion, the adjacently disposed ends of a pair of railway freight cars in which a ball and race assembly can be utilized adjacent at least one end of such slackless drawbar assembly.

Another object of the present invention is to provide a female connection member for use with a slackless type drawbar assembly that connects together, in a substantially semi-permanent fashion, the adjacently disposed ends of a pair of railway freight cars which will enable a minimum number of components which must move relative to each other to be used, especially, when compared to the relatively large number of components that are required to move with respect to each other in the presently known prior art type slackless drawbar assemblies.

Still another object of the present invention is to provide a female connection member for use with a slackless type drawbar assembly that connects together, in a substantially semi-permanent fashion, the adjacently disposed ends of a pair of railway freight cars which will, generally, require substantially less repair and/or routine maintenance, particularly, when compared to the repair and/or routine maintenance requirements of presently known prior art type slackless drawbar assemblies.

Yet another object of the present invention is to provide a female connection member for use with a slackless type drawbar assembly that connects together, in a substantially semi-permanent fashion, the adjacently disposed ends of a pair of railway freight cars which will exhibit a relatively long operating service life, especially when compared to the normal operating service life of such presently known prior art type slackless drawbar assemblies.

A further object of the present invention is to provide a female connection member for use with a slackless type drawbar assembly that connects together, in a substantially semi-permanent fashion, the adjacently disposed ends of a pair of railway freight cars which will be significantly more cost effective for the user.

An additional object of the present invention is to provide a female connection member for use with a slackless type drawbar assembly that connects together, in a substantially semi-permanent fashion, the adjacently disposed ends of a pair of railway freight cars which can be easily retrofitted into existing railway freight cars.

Still yet another object of the present invention is to provide a female connection member for use with a slackless type drawbar assembly that connects together, in a substantially semi-permanent fashion, the adjacently disposed ends of a pair of railway freight cars which is lighter in weight than previously used conventional type couplers that require the use of yokes, draft gear, draft key members and follower members.

It is a still further object of the present invention to provide a female connection member for use with a slackless type drawbar assembly that connects together, in a substantially semi-permanent fashion, the adjacently disposed ends of a pair of railway freight cars which requires an absolute minimum number of frictionally engageable surfaces to be subjected to excessive frictional wear.

An additional object of the present invention is to provide a female connection member for use with a slackless type drawbar assembly that connects together, in a substantially semi-permanent fashion, the adjacently disposed ends of a pair of railway freight cars which does not require the use of any specialized tools and/or other equipment to install on a railway freight car.

A still further object of the present invention is to provide a female connection member for use with a slackless type drawbar assembly that connects together, in a substantially semi-permanent fashion, the adjacently disposed ends of a pair of railway freight cars which does not require the use of any front draft stop members.

Although a number of specific objects and advantages of the present invention have been described in some detail above, various additional objects and advantages of such female connection member for use with a slackless type drawbar assembly which incorporates a ball and race assembly at one end thereof will become much more readily apparent to those persons who are skilled in the railway freight car coupling art from the following more detailed description of the invention, particularly, when such detailed description is taken in conjunction with both the attached drawing Figures and with the appended claims.

### BRIEF DESCRIPTION OF THE DRAWINGS

Figure 1 is a top view which illustrates one presently preferred embodiment of the female connection member, constructed according to the present invention, for use in an improved slackless type drawbar assembly ; and
Figure 2 is a side elevation view, partially in cross section, of such female connection member illustrated in Figure 1 to be used in a slackless type drawbar assembly.

### BRIEF DESCRIPTION OF THE PRESENTLY PREFERRED EMBODIMENTS OF THE INVENTION

Prior to proceeding to the more detailed description of the female connection member used in an improved slackless type drawbar assembly, according to the present invention, it should first be noted that identical component parts, which have identical functions associated therewith, have been designated with identical reference numerals throughout the views that have been illustrated in the drawings, for the sake of clarity.

Reference is now made, more particularly, to the attached drawing Figures 1 and 2. Illustrated in Figures 1 and 2 is one presently preferred embodiment of a female connection member, generally designated, 10 used in conjunction with an improved slackless type drawbar assembly, illustrated in our copending patent application referenced above, for connecting together the adjacently disposed ends (not shown) of a pair of railway freight cars (not shown) in a substantially semi-permanent fashion.

Such slackless drawbar assembly includes at least one such female connection member 10. Such at least one female connection member 10 includes a first end portion 12. This first end portion 12 having a first predetermined configuration which enables the first end portion 12 of the at least one female connection member 10 to be disposed within and engaged to an outer end portion (not shown) of a center sill member (not shown) disposed on a bottom portion of a car body member (not shown) of a first railway car, also, (not shown). The female connection member 10, also, includes a radially opposed second end portion, generally designated, 20 which extends outwardly from such outer end portion of the center sill member. The first predetermined configuration of such first end portion 12 of the female connection member 10 is, preferably, substantially rectangular in shape. According to the presently preferred embodiment of the invention, such first end portion 12 and the radially opposed second end portion 20 of the female connection member 10 will be formed as an integral single piece casting which, preferably, will be a steel casting.

A cavity 14 is formed in the radially opposed second end portion 20 of such at least one female connection member 10. Such cavity 14 being defined by an inner surface 16 of a back wall portion 18, having a second predetermined configuration, an inner surface 22 of a top wall portion 24 and an inner surface 26 of a pair of side wall portions 28, each side wall portion 28 having a third predetermined configuration. Accordingly, such cavity 14 is open adjacent at least a portion of a bottom 32 and an outer end 34 of the radially opposed second end portion 20 of such at least one female connection member 10. In the presently preferred embodiment, the second predetermined configuration of such inner surface 16 of the back wall portion 18 of the cavity 14 formed in such second end portion 20 of the at least one female connection member 10 will be generally concave in at least one of a vertical direction and a horizontal direction. In a still more preferred embodiment, the second predetermined configuration of such inner surface 16 of the back wall portion 18 of such cavity 14 formed in the second end portion 20 of such female connection member 10 will be generally concave in both such vertical direction and such horizontal direction. In addition, the third predetermined configuration of such inner surfaces 26 of each of such pair of side wall portions 28 of the cavity 14 formed in such second end portion 20 of the at least one female connection member 10 will, preferably, be generally convex shaped in at least a horizontal direction. In the more preferred embodiment of the invention, as has been clearly illustrated in the drawing Figures, the third predetermined configuration of such inner surfaces 26 of such each of such pair of side wall portions 28 of cavity 14 formed in the second end portion 20 of such female connection member 10 will be generally convex shaped in both such horizontal direction and a vertical direction.

There is a first opening 36, having a fourth predetermined configuration, formed through a first one of such pair of side wall portions 28. Additionally, there is a radially opposed second opening (not shown) having a fifth predetermined configuration, formed through a second one of such pair of side wall portions 28. In the presently preferred embodiment of the invention, the fourth predetermined configuration of such first opening 36 formed through the first one of such pair of side wall portions 28 and such fifth predetermined configuration of the radially opposed second opening formed through such second one of such pair of side wall portions 28 will at least include a generally round portion 40 and a generally open bottom portion 42.

In addition to the female connection member 10 described in detail above, as is clear from our copending patent application referenced above, such slackless type drawbar assembly further includes at least one male connection member (not shown in Figures 1 and 2) which exhibits a sixth predetermined configuration. Such at least one male connection member includes each of a first end portion and a radially opposed second end portion. At least a portion of such first end portion of the at least one male connection member being movably disposed within such cavity 14 formed in the radially opposed second end portion 20 of such at least one female connection member 10. Preferably, the first end portion of such at least one male connection member will include an inner end surface, which is disposed facing the inner surface 16 of such back wall portion 18 of the cavity 14 formed in such second end portion 20 of the at least one female connection member 10, which is convex shaped in at least one of a vertical direction and a horizontal direction. It is even more preferred that such first end portion of such at least one male connection member be convex shaped in both such vertical direction and such horizontal direction.

An aperture (not shown) is formed through a predetermined portion of such at least one male connection member adjacent the first end portion thereof. Preferably, such aperture formed through the predetermined portion of such at least one male connection member adjacent the first end portion thereof will be generally round and will have a first predetermined diameter.

Disposed at least partially within such aperture, formed in the first end portion of such at least one male connection member, is a spherical shaped member (not shown). There is a pair of substantially horizontally disposed shaft members (not shown) extending outwardly for a predetermined distance from radially opposed and substantially vertically disposed outer surfaces of such spherical shaped member. At least a portion of a first one of such pair of horizontally disposed shaft members being disposed within such first opening 36 formed through the first one of such pair of side wall portions 28 and at least a portion of a second one of the pair of horizontally disposed shaft members being disposed within such second opening formed through the second one of such pair of side wall portions 28. Each respective one of such pair of shaft members includes a radially opposed and substantially flat surface portion formed thereon. According to the presently preferred embodiment of the invention, the spherical shaped member and the pair of horizontally disposed shaft members will be formed as an integral single piece, preferably, as a forging. Additionally, such spherical shaped member will include a chrome plating on at least a portion of an outer surface thereof. Such at least a portion of such chrome plated outer surface of the spherical shaped member will, preferably, be polished.

A race assembly (not shown) is provided to secure the spherical shaped member to such first end portion of the male connection member. In this arrangement, at least a portion of such race assembly is disposed within the aperture in a position such that an inner surface of such race assembly is disposed around at least a portion of such spherical shaped member disposed within the aperture formed in such first end portion of such at least one male connection member. In the presently preferred embodiment of the invention, such race assembly will be secured in a manner such that it can be readily removed from the first end portion of such male connection member.

In addition, it is presently preferred that the slackless type drawbar assembly further includes a substantially solid type lubricating liner member (not shown) disposed intermediate the outer surface of such spherical shaped member and such inner surface of the race assembly. Preferably, such solid lubricating liner member will be of the type manufactured by Kahr Bearing Co. under the Tradename "KARLON".

Another essential component of such slackless type drawbar assembly, according to the present invention, is a pair of wedge means. A first surface of a first one of such pair of wedge means is engaged with a first one of the radially opposed and substantially flat surface portions formed on such pair of shaft members. The second surface of such first one of the pair of wedge means is engaged with a substantially flat and vertically disposed surface portion formed on the first one of such pair of side wall portions 28 adjacent a portion of the first opening 36. Likewise, a first surface of a second one of such pair of wedge means is engaged with a second one of such radially opposed and substantially flat surface portions formed on such pair of shaft members and a second surface of the second one of such pair of wedges means is engaged with a substantially flat and vertically disposed surface portion (not shown) formed on the second one of such pair of side wall portions 28 adjacent a portion of such second opening.

In the presently preferred embodiment of the invention, such pair of wedge means includes a first wedge member and a second wedge member. Each of such first wedge member and the second wedge member has a bolt disposed therethrough in a substantially longitudinal direction and washer means. The first wedge member includes the first tapered surface engaged with the first flat surface portion of such radially opposed and substantially flat surface portions formed on such pair of shaft members and a substantially flat and vertically disposed second surface which is engaged with a mating vertical surface disposed on such first opening 36 formed through the first one of such pair of side wall portions 28.

The second wedge member, preferably, substantially identical to such first wedge member includes a tapered surface engaged with a second flat surface portion of such radially opposed and substantially flat surface portions formed on the pair of shaft members and a substantially flat and vertically disposed surface on such second wedge member is engaged with a mating vertical surface disposed on such second opening formed through the second one of such pair of side wall portions 28.

Another essential element of the present invention is a means engageable with such second end portion of the at least one male connection member and a second end portion of another male connection member for securing such second end portion of the at least one male connection member to the second end portion of such other male connection member thereby forming an improved slackless type drawbar assembly.

According to one embodiment of the present invention, such means for engagement with such second end portion of the at least one male connection member and the second end portion of such other male connection member for securing them together may be a simple weldment.

In a presently preferred embodiment of the invention, however, such means engageable with the second end portion of such at least one male connection member and the second end portion of such other male connection member for securing them together will include at least one of a bar-like member and a pipe-like member disposed intermediate and secured to such second end portion of the at least one male connection member and the second end portion of such other male connection member. In the case where such pipe-like member is used, it is possible that the second end portion of such first male connection member and the second end of such second male connection member include a male member inserted into respective opposed ends of such pipe-like member.

According to the most preferred embodiment of the invention, such improved slackless type drawbar assembly will further include a second female connection member which is substantially identical to such first female connection member 10. Like the first female connection member 10, such second female connection member includes a first end portion, having a seventh predetermined configuration, to enable such first end portion of the second female connection member to be engaged within an outer end portion of a center sill member disposed on a bottom portion of a car body member of a second railway car and a radially opposed second end portion which extends outwardly from such outer end portion of such center sill member of the second railway car.

A second cavity is formed in the radially opposed second end portion of such second female connection member. This second cavity, like the first cavity 14, is defined by an inner surface of a back wall portion, having an eighth predetermined configuration, an inner surface of a top wall portion and an inner surface of a pair of side wall portions. The inner surface of each side wall portion having a ninth predetermined configuration. Such second cavity is, preferably, also open adjacent at least a portion of a bottom and an outer end of such radially opposed second end portion of the second female connection member. In this embodiment of the invention, the eighth predetermined configuration of such inner surface of the back wall portion of such second female connection member will be substantially identical to such back wall portion 18 of the cavity 14 formed in the second end portion 20 of such at least one female connection member 10. Further, the ninth predetermined configuration of the inner surfaces of each of such pair of side wall portions of the second end portion of such second female connection member will be substantially identical to the third predetermined configuration of such inner surfaces 26 of each of such pair of side wall portions 28 of such cavity 14 formed in the second end portion 20 of the at least one female connection member 10.

Additionally, a first opening, having a tenth predetermined configuration, is formed through a first one of such pair of side wall portions of the second end portion of such second female connection member and a radially opposed second opening, having an eleventh predetermined configuration, is formed through a second one of such pair of side wall portions of the second end portion of such second female connection member. Preferably, in this embodiment of the invention, the tenth predetermined configuration of such first opening formed through the first one of such pair of side wall portions of the second end portion of such second female connection member and the eleventh predetermined configuration of such radially opposed opening formed through the second one of such pair of side wall portions of such second end portion of the second female connection member at least includes a generally round portion and a generally open bottom portion.

A second male connection member, having a twelfth predetermined configuration, is provided in the presently preferred embodiment of the invention. Such second male connection member includes a first end portion in which at least a portion thereof is movably disposed within such second cavity formed in such radially opposed second end portion of such second female connection member and a radially opposed second end portion. Like the first end portion of the first male connection member, such first end portion of this second male connection member includes a surface disposed facing the inner surface of such back wall portion of the second female connection member which is convex shaped in each of a vertical direction and a horizontal direction.

In addition, there is a second aperture formed through a predetermined portion of such second male connection member adjacent the first end portion thereof.

The preferred embodiment of this invention further includes a second spherical shaped member having at least a portion thereof disposed within such second aperture formed through such first end portion of the second male connection member. A second pair of substantially horizontally disposed shaft members extend outwardly for a predetermined distance from radially opposed and substantially vertically disposed outer surfaces of such second spherical shaped member. At least a portion of a first one of such second pair of shaft members being disposed within the first opening formed through such first one of the pair of side wall portions of such second end portion of the second female connection member and at least a portion of a second one of such pair of shaft members being disposed within the second opening formed through the second one of such pair of side wall portions. Each respective one of such second pair of shaft members has a radially opposed and substantially flat surface portion formed thereon.

A second race assembly having at least a portion thereof disposed within such second aperture is secured to the first end portion of such second male connection member. An inner surface of this second race assembly is disposed around such at least a portion of the second spherical shaped member disposed within such second aperture formed in the first end portion of such second male connection member.

Additionally, there is a second pair of wedge means provided. A first surface of a first one of such second pair of wedge means is engaged with a first one of such radially opposed and substantially flat surface portions formed on the second pair of shaft members and a second surface of such first one of the second pair of wedge means is engaged with a substantially flat and vertically disposed surface portion formed on the first one of such pair of side wall portions of the second end portion of such second female connection member adjacent a portion of such first opening. Likewise, a first surface of a second one of such second pair of wedge means is engaged with a second one of such radially opposed and substantially flat surface portions formed on the second pair of shaft members and a second surface of such second one of such second pair of wedge means is engaged with a substantially flat and vertically disposed surface portion formed on the second one of such pair of side wall portions of the second end of such second female connection member adjacent a portion of the second opening.

Preferably, the improved slackless type drawbar assembly further includes a second substantially solid type lubricating liner member disposed intermediate an outer surface of such second spherical shaped member and the inner surface of such second race assembly.

According to the presently preferred embodiment of the invention, such second race assembly is removably secured to such first end of the second male connection member. In addition, such second spherical shaped member and such second pair of shaft members are formed as an integral single piece component. Further, such second pair of wedge means will include a first and a second wedge member. Each of such first and second wedge members have a bolt disposed therethrough in a longitudinal direction and washer means. The first one of such second pair wedge members includes a tapered surface engaged with a first flat surface portion of the axially opposed and substantially flat surface portions formed on such second pair of shaft members and a substantially flat and vertical surface disposed on such first one of the second pair of wedge members is engaged with a mating vertical surface disposed on such first opening formed through the first one of such pair of side wall portions of the second end portion of such second female connection member. The second one of such second pair of wedge members includes a tapered surface engaged with a second flat surface portion of such radially opposed and substantially flat surface portions formed on such pair of shaft members and a substantially flat and vertically disposed surface on the second one of such first and second wedge members is engaged with a mating vertical surface disposed on the second opening formed through such second one of such pair of side wall portions of such second female connection member.

## Claims

1. A female connection member 10 used in conjunction with a slackless type drawbar assembly which connects together adjacently disposed ends of a pair of railway cars in a substantially semi-permanent fashion, said female connection member comprising:
(a) a first end portion 12, having a first predetermined configuration to enable said first end portion of said female connection member to be engaged within an outer end portion of a center sill member disposed on a bottom portion of a car body member of a first railway car,
(b) a radially opposed second end portion 20 which extends outwardly from such outer end portion of such center sill member;
(c) a cavity 16 formed in said radially opposed second end portion of said female connection member, said cavity being defined by an inner surface 16 of a back wall portion 18, having a second predetermined configuration, an inner surface 22 of a top wall portion 24 and an inner surface 26 of a pair of side wall portions 28, each side wall portion having a third predetermined configuration, said cavity being open adjacent at least a portion of a bottom 32 and an outer end 34 of said radially opposed second end portion of said female connection member;
(d) a first opening 36, having a fourth predetermined configuration, formed through a first one of said pair of side wall portions 28; and
(e) a radially opposed second opening, having a fifth predetermined configuration, formed through a second one of said pair of side wall portions.

2. A female connection member for a slackless type drawbar assembly, according to claim 1, wherein said first predetermined configuration of said first end portion 12 of said female connection member 10 is generally rectangular.

3. A female connection member for a slackless type drawbar assembly, according to claim 1, wherein said second predetermined configuration of said inner surface 22 of said back wall portion 18 of said cavity 14 formed in said second end portion 20 of said female connection member 10 will be generally concave in at least one of a vertical direction and a horizontal direction.

4. A female connection member for a slackless type drawbar assembly, according to claim 3, wherein said second predetermined configuration of said inner surface 22 of said back wall portion 18 of said cavity 14 formed in said second end portion 20 of said female connection member 10 will be generally concave in both said vertical direction and said horizontal direction.

5. A female connection member for a slackless type drawbar assembly, according to claim 3, wherein said third predetermined configuration of said inner surface of each of said pair of side wall portions 28 of said cavity 14 formed in said second end portion of said female connection member 10 will be generally convex shaped in at least a horizontal direction.

6. A female connection member for a slackless type drawbar assembly, according to claim 5, wherein said third predetermined configuration of said inner surface of each of said pair of side wall portions 28 of cavity 14 formed in said second end portion said female connection member 10 will be generally convex shaped in both said horizontal direction and a vertical direction.

7. A female connection member for a slackless type drawbar assembly, according to claim 1, wherein said fourth predetermined configuration of said first opening 36 formed through said first one of said pair of side wall portions 28 will at least include a generally round portion and a generally open bottom portion.

8. A female connection member for a slackless type drawbar assembly, according to claim 7, wherein said fifth predetermined configuration of said radially opposed second opening formed through said second one of said pair of side wall portions 28 will at least include a generally round portion and a generally open bottom portion.

9. A female connection member for a slackless type drawbar assembly, according to claim 1, wherein said female connection member 10 is formed as an integral single piece casting.

10. A female connection member for a slackless type drawbar assembly, according to claim 9, wherein said integral single piece casting is a steel casting.

11. A slackless type drawbar assembly for connecting together adjacently disposed ends of a pair of railway cars in a substantially semi-permanent fashion including a female connection member, a male connection member having at least a portion of a first end thereof movably disposed within such female connection member, an aperture formed through a predetermined portion of such male connection member adjacent such first end thereof receives at least a portion of a spherical shaped member therein, a first pair of horizontally disposed shaft members extending outwardly for a predetermined distance from axially opposed outer surfaces of such spherical shaped member, each respective one of such pair of shaft members includes an axially opposed and substantially flat surface portion thereon, a race assembly is disposed within such aperture and secured to such first end of such male connection member, an inner surface of such race assembly being disposed around such portion of such spherical shaped member disposed within such aperture formed in such male connection member, a means engageable with a second end of such male connection member and a second end of another male connection member for securing such second end of such male connection member to such second end of such other male connection member, a pair of wedge means, a first one of such pair of wedge means being engaged with a first one of such axially opposed and substantially flat surface portions formed on such pair of shaft members and a second one of such pair of wedge means being engaged with a second one of such axially opposed and substantially flat surface portions formed on such pair of shaft members, comprising a specially designed female connection member to enable use of a slackless type drawbar assembly having a ball and race assembly disposed on one end thereof, said specially designed female connection 10 member including:
(a) a first end portion 12, having a first predetermined configuration to enable said first end portion of said female connection member to be engaged within an outer end portion of a center sill member disposed on a bottom portion of a car body member of a first railway car;
(b) a radially opposed second end portion 20 which extends outwardly from such outer end portion of such center sill member;
(c) a cavity 14 formed in said radially opposed second end portion of said female connection member, said cavity being defined by an inner surface 16 of a back wall portion 18, having a second predetermined configuration, an inner surface 22 of a top wall portion 24 and an inner surface 26 of a pair of side wall portions 28, each side wall portion having a third predetermined configuration, said cavity being open adjacent at least a portion of a bottom 32 and an outer end 34 of said radially opposed second end portion of said female connection member;
(d) a first opening 36, having a fourth predetermined configuration, formed through a first one of said pair of side wall portions 28; and
(e) a radially opposed second opening, having a fifth predetermined configuration, formed through a second one of said pair of side wall portions.

12. A slackless type drawbar assembly, according to claim 11, wherein said assembly further includes a substantially solid type lubricating liner member disposed intermediate said spherical shaped member and said inner surface of said race assembly.

13. A slackless type drawbar assembly, according to claim 11, wherein said means engageable with a second end of said male connection member for securing said second end of said male connection member to said second end of said other male connection member includes at least one of a bar-like and a pipe-like member disposed intermediate and secured to said second end of said male connection member and said second end of said other male connection member.

14. A slackless type drawbar assembly, according to claim 11, wherein a shape of outer surface portions of said first end portion of said female connection member is generally rectangular.

15. A slackless type drawbar assembly, according to claim 11, wherein said second predetermined configuration of said inner surface of said back wall portion of said female connection member will be generally concave in both a vertical direction and a horizontal direction.

16. A slackless type drawbar assembly, according to claim 15, wherein said third predetermined configuration of said inner surfaces of each of said pair of side wall portions of said female connection member will be generally convex shaped in at least a horizontal direction.

17. A slackless type drawbar assembly, according to claim 16, wherein said third predetermined configuration of said inner surfaces of each of said first pair of side wall portions of said first female connection member will be generally convex shaped in both a horizontal direction and a vertical direction.

18. A slackless type drawbar assembly, according to claim 15, wherein said first end of said male connection member includes a surface, disposed facing said inner surface of said back wall portion of said female connection member, which is convex shaped in each of a vertical direction and a horizontal direction.

19. A slackless type drawbar assembly, according to claim 11, wherein said fourth predetermined configuration of said first opening formed through said first one of said pair of side wall portions and said fifth predetermined configuration of said axially opposed second opening formed through said second one of said pair of side wall portions will at least include a generally round portion and a generally open bottom portion.

20. A slackless type drawbar assembly, according to claim 11, wherein said race assembly is removably secured to said first end of said male connection member.

21. A slackless type drawbar assembly, according to claim 11, wherein said spherical shaped member and said pair of shaft members are formed as an integral single piece component.

22. A slackless type drawbar assembly, according to claim 11, wherein said pair of wedge means includes a pair wedge members each having a bolt disposed therethrough in a longitudinal direction and washer means, a first one of said pair of wedge members includes a tapered surface engaged with a first flat surface portion of said axially opposed and substantially flat surface portions formed on said pair of shaft members and a substantially flat and vertical surface disposed on said first one of said pair of wedge members is engaged with a mating surface of a respective front draft stop member and a second one of such pair of wedge members includes a tapered surface engaged with a second flat surface portion of said axially opposed and substantially flat surface portions formed on said pair of shaft members, a substantially flat and vertical surface disposed on said second one of said pair of wedge members engages with a mating surface of a respective front draft stop member.

## Patentansprüche

1. Aufnahmeverbindungselement (10), das im Zusammenhang mit einer spielfreien Zugstangenanordnung verwendet wird, die benachbart angeordnete Enden eines Paares von Eisenbahnwagons in im wesentlichen halbpermanenter Weise verbindet, wobei das Aufnahmeverbindungselement aufweist:
(a) ein erstes Endteil (12) mit einer ersten vorbestimmten Ausbildung, um den ersten Endteil des Aufnahmeverbindungselements in die Lage zu versetzen, mit einem äußeren Endteil eines Mittelschwellenelements am Bodenteil eines Wagon-Fahrgestells eines ersten Eisenbahnwagons in Eingriff zu treten,
(b) einen radial gegenüberliegenden Endteil (20), der sich von dem äußeren Endteil des Mittelschwellenelements nach außen erstreckt;
(c) einen Hohlraum (14), der in dem radial gegenüberliegenden zweiten Endteil des Aufnahmeverbindungselements ausgeformt ist, wobei der Hohlraum definiert wird durch eine Innenfläche (16) eines Rückwandabschnitts (18), die eine zweite vorbestimmte Ausbildung aufweist, eine Innenfläche (22) eines Oberwandabschnitts (24) und eine Innenfläche (26) eines Paares von Seitenwandabschnitten (28), wobei jeder Seitenwandabschnitt eine dritte vorbestimmte Ausbildung aufweist, der Hohlraum benachbart zu mindestens einem Teil eines Bodens (32) und einem Außenende (34) des radial abgewandten zweiten Endteils des Aufnahmeverbindungselements offen ist;
(d) eine erste Öffnung (36) mit einer vierten vorbestimmten Ausbildung, welche durch einen ersten des Paares von Seitenwandabschnitten (28) hindurch ausgebildet ist; und
(e) eine radial gegenüberstehende zweite Öffnung mit einer fünften vorbestimmten Ausbildung, welche durch einen zweiten des Paares von Seitenwandabschnitten hindurch ausgebildet ist.

2. Aufnahmeverbindungselement nach Anspruch 1, bei dem die erste vorbestimmte Ausbildung des ersten Endteils (12) des Aufnahmeverbindungselements (10) etwa rechteckig ist.

3. Aufnahmeverbindungselement nach Anspruch 1, bei dem die zweite vorbestimmte Ausbildung der Innenfläche (22) des Rückwandabschnitts (18) des Hohlraums, die in dem zweiten Endteil (20) des Aufnahmeverbindungselements (10) ausgebildet ist, in zumindest einer von der vertikalen und der horizontalen Richtung etwa konkav ausgebildet ist.

4. Aufnahmeverbindungselement nach Anspruch 3, bei dem die zweite vorbestimmte Ausbildung der Innenfläche (22) des Rückwandabschnitts (18) des in dem zweiten Endteil (20) des Aufnahmeverbindungselements (10) ausgebildeten Hohlraums (14) sowohl in vertikaler als auch in horizontaler Richtung im wesentlichen konkav ausgebildet ist.

5. Verbesserte spielfreie Zugstangenanordnung nach Anspruch 3, bei der die dritte vorbestimmte Ausbildung der Innenflächen jedes der paarweisen Seitenwandabschnitte (28) des in dem zweiten Endteil des Aufnahmeverbindungselements (10) ausgebildeten Hohlraums (14) in zumindest horizontaler Richtung im wesentlichen konvex ausgebildet ist.

6. Aufnahmeverbindungselement nach Anspruch 5, bei dem die dritte vorbestimmte Ausbildung der Innenflächen jedes der paarweisen Seitenwandabschnitte (28) des in dem zweiten Endteil des Aufnahmeverbindungselements (10) ausgebildeten Hohlraums (14) sowohl in horizontaler als auch in vertikaler Richtung im wesentlichen konvex ausgebildet ist.

7. Aufnahmeverbindungselement nach Anspruch 1, bei dem die vierte vorbestimmte Ausbildung der ersten durch die erste der paarweisen Seitenwandabschnitte (28) hindurch ausgebildeten Öffnung (36) zumindest einen im wesentlichen runden Abschnitt und einen im wesentlichen offenen Bodenabschnitt aufweist.

8. Aufnahmeverbindungselement nach Anspruch 7, bei dem die fünfte vorbestimmte Ausbildung der radial abgewandten zweiten Öffnung, die durch die zweite der paarweisen Seitenwandabschnitte (28) hindurch ausgebildet ist, zumindest einen im wesentlichen runden Abschnitt und einen im wesentlichen offenen Bodenabschnitt besitzt.

9. Aufnahmeverbindungselement nach Anspruch 1, bei dem die Aufnahmeverbindung als integrales Einzelgußteil ausgebildet ist.

10. Aufnahmeverbindungselement nach Anspruch 9, bei dem das integrale Einzelgußteil ein Stahlgußteil ist.

11. Spielfreie Zugstangenanordnung zum Verbinden benachbarter Enden eines Paares von Eisenbahnwagons in im wesentlichen halbdauerhafter Weise, umfassend ein Aufnahmeverbindungselement, ein Einführverbindungselement, das mit mindestens einem Teil seines ersten Endes beweglich im Inneren eines solchen Aufnahmeverbindungselements angeordnet ist, eine Öffnung, die einen vorbestimmten Abschnitt eines solchen Einführverbindungselements in der Nähe seines ersten Endes durchsetzt, zumindest einen Teil eines kugelförmigen Elements in sich aufnimmt, ein Paar horizontal angeordneter Wellenelemente, die sich über eine vorbestimmte Strecke von einander axial abgewandten Außenflächen eines solchen kugelförmigen Elements nach außen erstrecken, wobei jedes von dem Paar von Wellenelementen einen axial gegenüberliegenden und im wesentlichen flachen Oberflächenabschnitt aufweist, sich in jener Öffnung eine Gleitbahnanordnung befindet, die an dem ersten Ende des Einführverbindungselements angebracht ist, eine Innenfläche dieser Gleitbahnanordnung um jenen Abschnitt des kugelförmigen Elements herum angeordnet ist, welches sich in der Öffnung befindet, die in dem Einführverbindungselement ausgebildet ist, eine mit einem zweiten Ende eines solchen Einführverbindungselements und einem zweiten Ende eines weiteren Einführverbindungselements in Eingriff bringbare Einrichtung zum Sichern des zweiten Endes des Einführverbindungselements an dem zweiten Ende des weiteren Einführverbindungselements, ein Paar Keileinrichtungen, von denen eine erste Keileirrichtung mit einem ersten jener axial abgewandten und im wesentlichen flachen Oberflächenabschnitte an dem Paar von Wellenelementen in Eingriff steht, und eine zweite der paarweisen Keileinrichtungen mit einem zweiten der axial abgewandten und im wesentlichen flachen Oberflächenabschnitte an dem Paar von Wellenelementen in Eingriff steht, umfassend ein speziell ausgestaltetes Aufnahmeverbindungselement, das die Verwendung einer spielfreien Zugstangenanordnung gestattet, an deren einem Ende sich eine Kugel- und Gleitbahnanordnung befindet, wobei das speziell ausgebildete Aufnahmeverbindungselement (10) umfaßt:
(a) ein erstes Endteil (12) mit einer ersten vorbestimmten Ausbildung, um den ersten Endteil des Aufnahmeverbindungselements in die Lage zu versetzen, mit einem äußeren Endteil eines Mittelschwellenelements am Bodenteil eines Wagon-Fahrgestells eines ersten Eisenbahnwagons in Eingriff zu treten,
(b) einen radial gegenüberliegenden Endteil (20), der sich von dem äußeren Endteil des Mittelschwellenelements nach außen erstreckt;
(c) einen Hohlraum (14), der in dem radial gegenüberliegenden zweiten Endteil des Aufnahmeverbindungselements ausgeformt ist, wobei der Hohlraum definiert wird durch eine Innenfläche (16) eines Rückwandabschnitts (18), die eine zweite vorbestimmte Ausbildung aufweist, eine Innenfläche (22) eines Oberwandabschnitts (24) und eine Innenfläche (26) eines Paares von Seitenwandabschnitten (28), wobei jeder Seitenwandabschnitt eine dritte vorbestimmte Ausbildung aufweist, der Hohlraum benachbart zu mindestens einem Teil eines Bodens (32) und einem Außenende (34) des radial abgewandten zweiten Endteils des Aufnahmeverbindungselements offen ist;
(d) eine erste Öffnung (36) mit einer vierten vorbestimmten Ausbildung, welche durch einen ersten des Paares von Seitenwandabschnitten (28) hindurch ausgebildet ist; und
(e) eine radial gegenüberstehende zweite Öffnung mit einer fünften vorbestimmten Ausbildung, welche durch einen zweiten des Paares von Seitenwandabschnitten hindurch ausgebildet ist.

12. Zugstangenanordnung nach Anspruch 11, bei dem die Anordnung außerdem ein im wesentlichen festes Schmierfutterelement enthält, welches sich zwischen dem kugelförmigen Element und der Innenfläche der Gleitbahnanordnung befindet.

13. Zugstangenanordnung nach Anspruch 11, bei dem die mit einem zweiten Ende des Einführverbindungselements in Eingriff bringbare Einrichtung zum Sichern des zweiten Endes des Einführverbindungselements an dem zweiten Ende des anderen Einführverbindungselements ein stabähnliches und/oder rohrähnliches Element aufweist, welches sich zwischen dem zweiten Ende des Einführverbindungselements und dem zweiten Ende des anderen Einführverbindungselements befindet und an diesen fixiert ist.

14. Zugstangenanordnung nach Anspruch 11, bei der die Gestalt der Außenflächenabschnitte des ersten Endteils des Aufnahmeverbindungselements im wesentlichen rechteckig ist.

15. Zugstangenanordnung nach Anspruch 11, bei dem die zweite vorbestimmte Ausbildung der Innenfläche des Rückwandabschnitts des Aufnahmeverbindungselements sowohl in vertikaler als auch in horizontaler Richtung im wesentlichen konkav ist.

16. Zugstangenanordnung nach Anspruch 15, bei dem die dritte vorbestimmte Ausbildung der Innenflächen jedes der paarweisen Seitenwandabschnitte des Aufnahmeverbindungselements in zumindest horizontaler Richtung im wesentlichen konvex ist.

17. Zugstangenanordnung nach Anspruch 16, bei dem die dritte vorbestimmte Ausbildung der Innenfläche jedes der paarweisen Seitenwandabschnitte des ersten Aufnahmeverbindungselements sowohl in horizontaler als auch in vertikaler Richtung im wesentlichen konvex ausgeformt ist.

18. Zugstangenanordnung nach Anspruch 15, bei dem das erste Ende des Einführverbindungselements eine der Innenfläche des Rückwandabschnitts des Aufnahmeverbindungselements gegenüberliegende Fläche aufweist, die sowohl in vertikaler als auch in horizontaler Richtung konvex geformt ist.

19. Zugstangenanordnung nach Anspruch 11, bei dem die vierte vorbestimmte Ausbildung der ersten Öffnung durch den ersten der paarweisen Seitenwandabschnitte und die fünfte vorbestimmte Ausbildung der axial abgewandten zweiten Öffnung durch den zweiten der paarweisen Seitenwandabschnitte zumindest einen im wesentlichen runden Abschnitt und einen im wesentlichen offenen Bodenabschnitt enthält.

20. Zugstangenanordnung nach Anspruch 11, bei dem die Gleitbahnanordnung abnehmbar an dem ersten Ende des Einführverbindungselements fixiert ist.

21. Zugstangenanordnung nach Anspruch 11, bei dem das kugelförmige Element und das Paar von Wellenelementen als integrale einstückige Komponente ausgebildet sind.

22. Zugstangenanordnung nach Anspruch 11, bei dem das Paar von Keileinrichtungen ein Paar von Keilelementen, die jeweils in Längsrichtung von einem Bolzen durchsetzt sind, und Beilagscheibeneinrichtungen aufweist, wobei ein erstes der paarweisen Keilelemente eine sich verjüngende Fläche enthält, die mit einem ersten flachen Oberflächenabschnitt der axial abgewandten und im wesentlichen flachen Oberflächenabschnitte an dem Paar von Wellenelementen in Eingriff steht, und eine im wesentlichen flache und vertikale Fläche an dem ersten der paarweisen Keilelemente mit einer Paßfläche eines zugehörigen vorderen Zuganschlagelements in Eingriff steht, aufweist, und ein zweites der paarweisen Keilelemente eine sich verjüngende Fläche enthält, die mit einem zweiten flachen Oberflächenabschnitt der axial abgewandten und im wesentlichen flachen Oberflächenabschnitte an dem Paar von Wellenelementen in Eingriff steht, wobei eine im wesentlichen flache und vertikale Fläche an dem zweiten der paarweisen Keilelemente mit einer Paßfläche eines zugehörigen vorderen Zuganschlagelements in Eingriff steht.

## Revendications

1. Elément femelle (10) d'accouplement utilisé conjointement avec un ensemble à barre d'attelage du type sans jeu qui relie entre elle des extrémités, placées de façon à être adjacentes, de deux véhicules de chemin de fer d'une manière sensiblement permanente, ledit élément femelle d'accouplement comportant :
(a) une première partie extrême (12), ayant une première configuration prédéterminée pour permettre à ladite première partie extrême dudit élément femelle d'accouplement d'être engagée dans une partie extrême extérieure d'un élément à longeron central disposé sur une partie inférieure d'un élément de caisse d'un premier véhicule de chemin de fer,
(b) une seconde partie extrême (20) radialement opposée qui s'étend vers l'extérieur depuis cette partie extrême extérieure de cet élément à longeron central ;
(c) une cavité (14) formée dans ladite seconde partie extrême radialement opposée dudit élément femelle d'accouplement, ladite cavité étant définie par une surface intérieure (16) d'une partie de paroi arrière (18), ayant une seconde configuration prédéterminée, une surface intérieure (22) d'une partie de paroi supérieure (24) et une surface intérieure (26) d'une paire de parties de parois latérales (28), chaque partie de paroi latérale ayant une troisième configuration prédéterminée, ladite cavité étant ouverte à proximité immédiate d'au moins une partie d'un fond (32) et d'une extrémité extérieure (34) de ladite seconde partie extrême radialement opposée dudit élément femelle d'accouplement ;
(d) une première ouverture (36), ayant une quatrième configuration prédéterminée, formée à travers une première de ladite paire de parties de paroi latérales (28); et
(e) une seconde ouverture radialement opposée, ayant une cinquième configuration prédéterminée, formée à travers une seconde de ladite paire de parties de paroi latérales.

2. Elément femelle d'accouplement pour un ensemble à barre d'attelage du type sans jeu, selon la revendication 1, dans lequel ladite première configuration prédéterminée de ladite première partie extrême (12) dudit élément femelle (10) d'accouplement est globalement rectangulaire.

3. Elément femelle d'accouplement pour un ensemble à barre d'attelage du type sans jeu, selon la revendication 1, dans lequel ladite deuxième configuration prédéterminée de ladite surface intérieure (22) de ladite partie de paroi arrière (18) de ladite cavité (14) formée dans ladite seconde partie extrême (20) dudit élément femelle (10) d'accouplement est globalement concave dans au moins l'une d'une direction verticale et d'une direction horizontale.

4. Elément femelle d'accouplement pour un ensemble à barre d'attelage du type sans jeu, selon la revendication 3, dans lequel ladite deuxième configuration prédéterminée de ladite surface intérieure (22) de ladite partie de paroi arrière (18) de ladite cavité (14) formée dans ladite seconde partie extrême (20) dudit élément femelle (10) d'accouplement est globalement concave dans, à la fois, ladite direction verticale et ladite direction horizontale.

5. Ensemble perfectionné à barre d'attelage du type sans jeu, selon la revendication 3, dans lequel ladite troisième configuration prédéterminée desdites surfaces intérieures de chacune de ladite paire de parties de paroi latérales (28) de ladite cavité (14) formée dans ladite seconde partie extrême dudit élément femelle (10) d'accouplement est de forme globalement convexe dans au moins une direction horizontale.

6. Elément femelle d'accouplement pour un ensemble à barre d'attelage du type sans jeu, selon la revendication 5, dans lequel ladite troisième configuration prédéterminée desdites surfaces intérieures de chacune de ladite paire de parties de paroi latérales (28) de la cavité (14) formée dans ladite seconde partie extrême dudit élément femelle (10) d'accouplement est de forme globalement convexe dans, à la fois, ladite direction horizontale et une direction verticale.

7. Elément femelle d'accouplement pour un ensemble à barre d'attelage du type sans jeu, selon la revendication 1, dans lequel ladite quatrième configuration prédéterminée de ladite première ouverture (36) formée à travers ladite première de ladite paire de parties de paroi latérales (28) comprend au moins une partie globalement ronde et une partie de fond globalement ouverte.

8. Elément femelle d'accouplement pour un ensemble à barre d'attelage du type sans jeu, selon la revendication 7, dans lequel ladite cinquième configuration prédéterminée de ladite seconde ouverture radialement opposée formée à travers ladite seconde de ladite paire de parties de paroi latérales (28) comprend au moins une partie globalement ronde et une partie de fond globalement ouverte.

9. Elément femelle d'accouplement pour un ensemble à barre d'attelage du type sans jeu, selon la revendication 1, dans lequel ledit élément femelle (10) d'accouplement est réalisé sous la forme d'une pièce moulée unique d'un seul bloc.

10. Elément femelle d'accouplement pour un ensemble à barre d'attelage du type sans jeu, selon la revendication 9, dans lequel ladite pièce moulée unique d'un seul bloc est une pièce moulée en acier.

11. Ensemble à barre d'attelage du type sans jeu pour accoupler entre elle des extrémités, placées de façon à être adjacentes, de deux véhicules de chemin de fer, d'une manière sensiblement semi-permanente, comprenant un élément femelle d'accouplement, un élément mâle d'accouplement ayant au moins une partie à une première extrémité de cet élément disposée de façon mobile à l'intérieur d'un tel élément femelle d'accouplement, une ouverture formée à travers une partie prédéterminée d'un tel élément mâle d'accouplement à proximité immédiate d'une telle première extrémité de celui-ci reçoit en elle au moins une partie d'un élément de forme sphérique, une première paire d'éléments de barre disposés horizontalement, s'étendant vers l'extérieur sur une distance prédéterminée à partir de surfaces extérieures opposées axialement d'un tel élément de forme sphérique, chacun, respectif, de cette paire d'éléments de barre porte une surface sensiblement plate et axialement opposée, un ensemble à bague est disposé à l'intérieur de cette ouverture et est fixé à cette première extrémité de cet élément mâle d'accouplement, une surface intérieure d'un tel ensemble à bague étant disposée autour de cette partie de cet élément de forme sphérique disposé à l'intérieur de cette ouverture formée dans cet élément mâle d'accouplement, un moyen pouvant être engagé avec une seconde extrémité de cet élément mâle d'accouplement et une seconde extrémité d'un autre élément mâle d'accouplement pour fixer cette seconde extrémité de cet élément mâle d'accouplement à cette seconde extrémité de cet autre élément mâle d'accouplement, une paire de moyens à coins, un premier de cette paire de moyens à coins étant engagé avec une première de ces parties de surface axialement opposées et sensiblement plates formées sur une telle paire d'éléments de barre et un second de cette paire de moyens à coins étant engagé avec une seconde de ces parties de surface axialement opposées et sensiblement plates formées sur une telle paire d'éléments de barre, comportant un élément femelle d'accouplement de conception spéciale pour permettre l'utilisation d'un ensemble à barre d'attelage du type sans jeu ayant un ensemble à rotule et bague disposé sur l'une de ses extrémités, ledit élément femelle d'accouplement (10) de conception spéciale comprenant :
(a) une première partie extrême (12), ayant une première configuration prédéterminée pour permettre à ladite première partie extrême dudit élément femelle d'accouplement d'être engagée dans une partie extrême extérieure d'un élément à longeron central disposé sur une partie inférieure d'un élément de caisse d'un premier véhicule de chemin de fer,
(b) une seconde partie extrême radialement opposée (20) qui s'étend vers l'extérieur depuis cette partie extrême extérieure d'un tel élément à longeron central
(c) une cavité (14) formée dans ladite seconde partie extrême radialement opposée dudit élément femelle d'accouplement, ladite cavité étant définie par une surface intérieure (16) d'une partie de paroi arrière (18), ayant une deuxième configuration prédéterminée, une surface intérieure (22) d'une partie de paroi supérieure (24) et une surface intérieure (26) d'une paire de parties de paroi latérales (28), chaque partie de paroi latérale ayant une troisième configuration prédéterminée, ladite cavité étant ouverte à proximité immédiate d'au moins une partie d'un fond (32) et d'une extrémité extérieure (34) de ladite seconde partie extrême radialement opposée dudit élément femelle d'accouplement ;
(d) une première ouverture (36), ayant une quatrième configuration prédéterminée, formée à travers une première de ladite paire de parties de paroi latérales (28); et
(e) une seconde ouverture radialement opposée, ayant une cinquième configuration prédéterminée, formée à travers une seconde de ladite paire de parties de paroi latérales.

12. Ensemble à barre d'attelage du type sans jeu, selon la revendication 11, dans lequel ledit ensemble comprend en outre un élément à coussinet lubrifiant du type sensiblement plein disposé entre ledit élément de forme sphérique et ladite surface intérieure dudit ensemble à bague.

13. Ensemble à barre d'attelage du type sans jeu, selon la revendication 11, dans lequel ledit moyen pouvant s'engager avec une seconde extrémité dudit élément mâle d'accouplement pour fixer ladite seconde extrémité dudit élément mâle d'accouplement à ladite seconde extrémité dudit autre élément mâle d'accouplement comprend au moins l'un d'un élément analogue à une tige et d'un élément analogue à un conduit disposé entre ladite seconde extrémité dudit élément mâle d'accouplement et ladite seconde extrémité dudit autre élément mâle d'accouplement et fixé à ces extrémités.

14. Ensemble à barre d'attelage du type sans jeu, selon la revendication 11, dans lequel une forme de parties de surface extérieure de ladite première partie extrême dudit élément femelle d'accouplement est globalement rectangulaire.

15. Ensemble à barre d'attelage du type sans jeu, selon la revendication 11, dans lequel ladite deuxième configuration prédéterminée de ladite surface intérieure de ladite partie de paroi arrière dudit élément femelle d'accouplement est globalement concave à la fois dans une direction verticale et une direction horizontale.

16. Ensemble à barre d'attelage du type sans jeu, selon la revendication 15, dans lequel ladite troisième configuration prédéterminée desdites surfaces intérieures de chacune de ladite paire de parties de paroi latérales dudit élément femelle d'accouplement est de forme globalement convexe dans au moins une direction horizontale.

17. Ensemble à barre d'attelage du type sans jeu, selon la revendication 16, dans lequel ladite troisième configuration prédéterminée desdites surfaces intérieures de chacune de ladite première paire de parties de paroi latérales dudit premier élément femelle d'accouplement est de forme globalement convexe à la fois dans une dirction horizontale et une direction verticale.

18. Ensemble à barre d'attelage du type sans jeu, selon la revendication 15, dans lequel ladite première extrémité dudit élément mâle d'accouplement présente une surface, disposée face à ladite surface intérieure de ladite partie de paroi arrière dudit élément femelle d'accouplement, qui est de forme convexe dans chacune d'une direction verticale et d'une direction horizontale.

19. Ensemble à barre d'attelage du type sans jeu, selon la revendication 11, dans lequel ladite quatrième configuration prédéterminée de ladite première ouverture formée à travers ladite première de ladite paire de parties de paroi latérales et ladite cinquième configuration prédéterminée de ladite seconde ouverture axialement opposée formée à travers ladite seconde de ladite paire de parties de paroi latérales comprennent au moins une partie globalement ronde et une partie de fond globalement ouverte.

20. Ensemble à barre d'attelage du type sans jeu, selon la revendication 11, dans lequel l'ensemble à bague est fixé de façon amovible à ladite première extrémité dudit élément mâle d'accouplement.

21. Ensemble à barre d'attelage du type sans jeu, selon la revendication 11, dans lequel ledit élément de forme sphérique et ladite paire d'éléments de barre sont formés en un constituant d'une seule pièce intégrée.

22. Ensemble à barre d'attelage du type sans jeu, selon la revendication 11, dans lequel ladite paire de moyens à coins comprend une paire d'éléments à coins ayant chacun un boulon disposé à travers lui dans une direction longitudinale et un moyen à rondelle, un premier de ladite paire d'éléments à coins présente une surface inclinée engagée avec une première partie de surface plate desdites parties de surface axialement opposées et sensiblement plates formées sur ladite paire d'éléments à barres et une surface sensiblement plate et verticale disposée sur ledit premier de ladite paire d'éléments à coins est engagée avec une surface complémentaire d'un élément de butée avant respectif de traction et un second de cette paire d'éléments à coins présente une surface inclinée engagée avec une seconde partie de surface plate desdites parties de surface axialement opposées et sensiblement plates formées sur ladite paire d'éléments à barres, une surface sensiblement plate et verticale disposée sur ledit second de ladite paire d'éléments à coins engageant une surface complémentaire d'un élément de butée avant respectif de traction.
